# EUROPEAN PATENT SPECIFICATION

(11) **EP 2 143 324 B1**
(45) Date of publication and mention of the grant of the patent: **16.08.2017**
(21) Application number: 09012618.6
(22) Date of filing: 28.05.2009
(51) Int. Cl.: A01K 85/01

(54) **An illuminator**
Leuchtvorrichtung
Dispositif d'éclairage

(30) Priority: 30.06.2008 GB 0811905
(43) Date of publication of application: 13.01.2010
(62) Divisional of application: 09251423.1
(73) Proprietor: Fox International Group Limited, Hainault, Essex IG6 3UT (GB)
(72) Inventor: Taylor, Adam, Loughton Essex IG10 2QH (GB)
(74) Representative: Crouch, David John

(56) References cited:
- WO-A1-2006/115399
- FR-A- 2 232 268
- US-A- 3 895 455
- US-A- 4 563 726
- US-A- 4 741 120
- US-A- 4 879 831
- US-A- 5 274 945
- US-A1- 2004 020 102

## Description

The present invention relates to an illuminator, especially but not exclusively as part of a fish-bite indicator having the construction of a hanger.

One proposed construction for such an illuminator comprises a part having a beta light recess.

Similar such devices are shown in US-A-2004/0020102 and in US-A-4563726.

WO2006/115399 discloses a package for containing drinks comprising a bottle having a recess for receiving and accommodating a chemilumine apparatus.

According to the present invention, there is provided an illuminator comprising a generally cylindrical body in and along an outer surface of which extends a beta light cavity, a beta light inserted into the cavity, and a sleeve which can be slid onto the cylindrical body with the beta light inserted in the beta light cavity, the sleeve having a slot in it which corresponds in position to the beta light cavity, the slot being narrower than the beta light cavity, so that light from the beta light within the cavity can pass through the slot, but not the beta light itself.

The illuminator may be part of a fish-bite indicator having the construction of a hanger.

The sleeve may be translucent.

The sleeve may be secured to the cylindrical body by way of a bayonet attachment.

An example of a fish-bite indicator embodying the present invention will now be described by way of example with reference to the accompanying drawings, in which:
- Figure 1: is a side perspective view of the fish-bite indicator;
- Figure 2: shows a side view of a weight assembly of the indicator shown in Figure 1;
- Figure 3: shows a further side view of the weight assembly of the indicator shown in Figures 1 and 2, viewed at right angles to the line of view of Figure 2;
- Figure 4: shows an axial sectional view of the weight assembly of the indicator shown in Figure 1, in the plane indicated by the line IV-IV shown in Figure 2; and
- Figure 5: shows an exploded view of the weight assembly of the indicator shown in Figure 1.

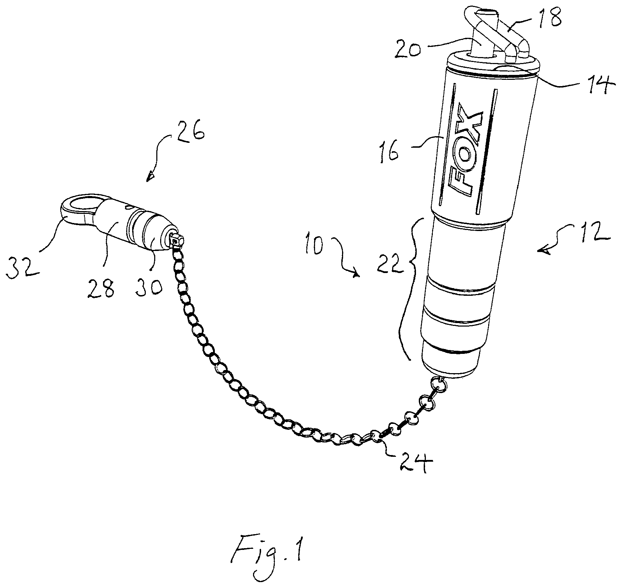

A fish-bite indicator 10 having a construction in the form of a hanger is shown in Figure 1. It comprises a weight assembly 12 comprising a generally cylindrical inner PTFE housing 14 surrounded by a close fitting sleeve 16. At an intended upper end of the weight assembly 12, there is a slanting U-shaped wire 18 having both of its ends anchored in an upper end of the housing 14. An engagement elongate plunger 20 extends through the housing 14 generally parallel to the axis thereof, and extends upwardly through the upper end thereof so that the upper end of the elongate plunger 20 projects slightly through the loop of the U-shaped wire 18.

A series of inter-engaging generally cylindrical hollow weights 22 are attached to the lower end of the housing 14.

A flexible chain 24 extends upwardly through the weights 22 and is attached, in a manner to be described herein, to the housing 14 at one end.

The other end of the chain 24 is attached, in a manner to be described in greater detail herein, to an attachment part 26. This has a generally cylindrical body 28, at one end of which there is an attachment device 30 to which one end of the chain 24 is attached, and at the other end of which there is a connector ring 32 integral with the body 28, the ring enabling the attachment part 26 to be readily secured, for example to a bank stick.

When the bite indicator 10 is put to use, the attachment part 26 is secured to a bank stick, and the weight assembly 12 engages a fishing line of a rod (not shown) by virtue of the line extending underneath the wire 18, between the latter and the housing 14 in such a manner that it is trapped by the plunger 20. If a fish takes a bite on the hook assembly at the end of the line of the rod (not shown), any movement it makes towards the rod will cause the hanger to drop. Correspondingly, any movement which the fish makes away from the rod will cause the weight assembly of the indicator to rise. The user may then make a strike whereby he lifts the rod upwardly from its rest (not shown). Although initially the weight assembly 12 will remain in engagement with the line of the rod, as the latter continues to be lifted the chain 24 will eventually become taut, pulling the plunger 20 downwardly in relation to the housing 14 and enabling the fishing line to escape from the looped wire 18. This frees the rod and the line completely from the indicator 10 and enables the angler to play the fish unhindered.

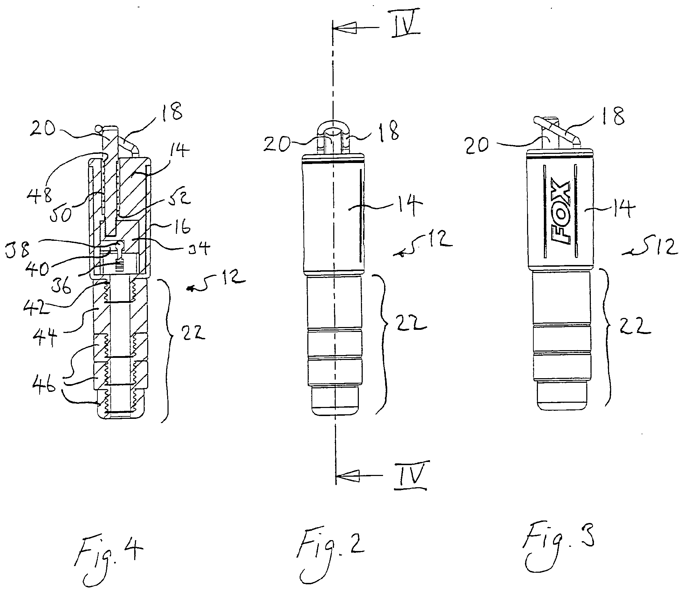

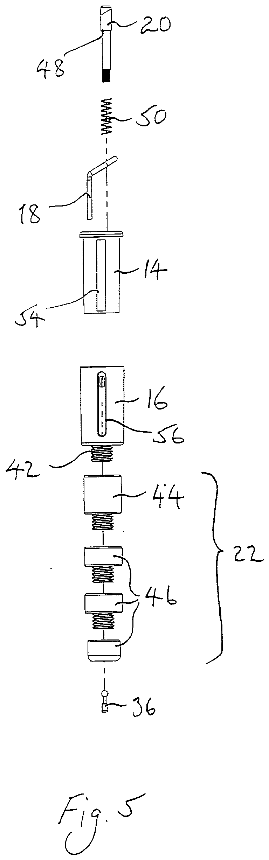

The bite indicator 10 will now be described in greater detail with reference to Figures 4 and 5.

Considering first of all the weight assembly 12, this is shown in greater detail in Figures 4 and 5. In particular, Figure 4 shows how the elongate plunger 20 is attached by screw-threading at its lower end to a metal block 34 received in a cylindrical hollow at the lower end of the housing 14 in such a manner that the block 34 is able to slide up and down that hollow. A metal spigot 36 has an upper end 38 held within a slot 40 within the block 34. It has a lower end, which is attached to one end of the chain 24 (not shown in Figure 4). A lower end of the sleeve 16 is provided with an externally screw-threaded tubular portion 42 by means of which an internally screw-threaded hollow cylindrical metal weight 44 is attached. Further weights 46 are connected in succession by corresponding screw-threaded connections to the weight 44.

The plunger 20 has a shoulder 48 close to its upper end, which is engaged by a compression spring 50 extending between that shoulder 48 and another shoulder 52 formed within the housing 14.

It will be appreciated therefore that when the chain 24 (not shown in Figure 4) is under tension by virtue of a strike being made by the user, the spigot 36 is pulled downwardly (relative to the housing 14) by the chain. This slides the block 34 downwardly through the hollow of the housing 14 and with it the plunger 20 against the force of the compression spring 50.

It will be appreciated therefore that once the tension in the chain 24 (not shown in Figure 4) is released, the spigot 36, block 34 and plunger 20 return to their initial positions by virtue of the restoring force of the compression spring 50.

As can be seen from Figure 5, the housing 14 is provided with an elongate axially extending recess or slot 54 in its outer surface. The sleeve 16 is provided with an elongate axially extending slot 56 which, when the sleeve surrounds the housing 14, is in registration with the recess 54. The slot 56 is of slightly narrow width than the recess 54 so that a beta light can be inserted into the cavity 54, and once the sleeve 16 is pushed on to the housing 14, it cannot escape from the housing 14 because the width of the slot 56 is too narrow. At the same time the slot 56 enables light to pass out therefrom, and if the sleeve is made of a translucent material, the light may be diffused throughout the sleeve 16, so that the whole sleeve appears illuminated. The sleeve 16 is secured to the housing 14 by bayonet connection means 68.

## Claims

1. An illuminator comprising a generally cylindrical body (14) in and along an outer surface of which extends a beta light cavity (54), a beta light inserted into the cavity, and a sleeve (16) which can be slid onto the cylindrical body (14) with the beta light inserted in the beta light cavity (54), the sleeve (16) having a slot (56) in it which corresponds in position to the beta light cavity (54), the slot (56) being narrower than the beta light cavity (54), so that light from the beta light within the cavity can pass through the slot (56), but not the beta light itself.

2. An illuminator according to claim 1, **characterised in that** the sleeve (16) is translucent.

3. An illuminator according to claim 1 or claim 2, **characterised in that** the sleeve (16) is secured to the cylindrical body (14) by way of a bayonet attachment.

4. A fish-bite indicator having a construction in the form of a hanger, comprising an illuminator as claimed in any preceding claim.

## Patentansprüche

1. Leuchtvorrichtung, umfassend einen im Allgemeinen zylindrischen Körper (14), in und entlang einer dessen Außenflächen sich eine Beta-Lichtquellen-(Betalight)-Aussparung (54) erstreckt, eine in die Aussparung eingesetzte Beta-Lichtquelle sowie eine Hülse (16), die auf den zylindrischen Körper (14) mit der in der Beta-Lichtquellen-Aussparung (54) eingesetzten Beta-Lichtquelle geschoben werden kann, wobei die Hülse (16) ein darin enthaltenes Langloch (56) aufweist, das in seiner Position der Beta-Lichtquellen-Aussparung (54) entspricht, wobei das Langloch (56) schmaler als die Beta-Lichtquellen-Aussparung (54) ist, so dass das Licht der Beta-Lichtquelle innerhalb der Aussparung das Langloch (56), jedoch nicht die Beta-Lichtquelle selbst passieren kann.

2. Leuchtvorrichtung nach Anspruch 1, **dadurch gekennzeichnet, dass** die Hülse (16) lichtdurchlässig ist.

3. Leuchtvorrichtung nach Anspruch 1 oder 2, **dadurch gekennzeichnet, dass** die Hülse (16) über eine Bajonettbefestigung an dem zylindrischen Körper (14) befestigt ist.

4. Fischbissanzeiger, der in Form eines Anhängers ausgebildet ist und eine Leuchtvorrichtung gemäß einem der vorstehenden Ansprüche umfasst.

## Revendications

1. Dispositif d'éclairage comportant un corps (14) de forme générale cylindrique à l'intérieur et le long d'une surface extérieure duquel s'étend une cavité (54) pour lampe béta, une lampe béta insérée dans la cavité pour lampe bêta et une chemise (16) qui peut être glissée sur le corps cylindrique (14) avec la lampe béta placée dans la cavité (54) pour lampe bêta, la chemise ayant une fente (56) qui correspond en position à la cavité (54) pour lampe bêta, la fente (56) étant plus étroite que la cavité (54) pour lampe béta de telle sorte que la lumière émise par la lampe béta dans la cavité puisse passer à, travers la fente (56) mais pas la lampe béta elle-même.

2. Dispositif d'éclairage selon la revendication 1 **caractérisé en ce que** la chemise (16) est translucide.

3. Dispositif selon la revendication 1 ou 2 **caractérisé en ce que** la chemise (16) est fixée au corps cylindrique (14) par une fixation à baïonnette.

4. Indicateur de touche ayant une construction en forme de suspenseur comportant un dispositif d'éclairage selon l'une quelconque des revendications précédentes.
